# EUROPEAN PATENT APPLICATION

(11) **EP 4 245 458 A1**
(43) Date of publication of application: **20.09.2023**
(21) Application number: 23155677.0
(22) Date of filing: 08.02.2023
(51) Int. Cl.: B24B 23/04, B23D 61/02

(54) **ACCESSORIES FOR OSCILLATING POWER TOOLS**

(30) Priority: 14.03.2022 US 202263269283 P
(71) Applicant: Black & Decker, Inc., New Britain, CT 06053 (US)
(72) Inventor: HOWE, Kevin, Towson, 21286 (US); GREEN, Matthew Christopher, Towson, 21286 (US); SAVARINO, Matthew, Towson, 21286 (US); JACKSON, Brandin, Towson, 21286 (US); NOVAK, Joseph T., Towson, 21286 (US)
(74) Representative: SBD IPAdmin

(57) **Abstract**

An accessory tool for a power-driven oscillating tool may include a plate, with a first working section defined along a first peripheral edge portion of the plate, and a second working section defined along a second peripheral edge portion of the plate. The first and second working sections may define cutting or abrading or chipping sections of the accessory tool. The first and second working sections may be separated by a notch formed in a third peripheral edge portion of the plate. Corner portions of the first working section and the second working section may be defined where the first and second working sections meet respective edge portions of the notch, allowing the corner portions to be inserted into and engaged in corresponding corner portions of channels for removal of material from the corner portions of the channels.

## Description

### FIELD

This relates to a power-driven oscillating tool, and in particular to an accessory that is attachable to a power-driven oscillating tool.

### BACKGROUND

Power-driven oscillating tools may employ various different types of accessories for performing cutting, abrading, filing and the like on a workpiece using a rapid oscillating motion of the attached accessory. Power-driven oscillating tools may include an attachment device allowing for attachment and detachment of the various different accessories to/from the oscillating tool, making the oscillating tool relatively easily adaptable for use in numerous different types of tasks and in numerous different environments. In some situations, access to the workpiece to complete a particular task, and/or effective completion of a task, may be somewhat limited by, for example, the installation environment, physical attributes associated with the workpiece and/or material, physical attributes of the oscillating tool, physical attributes of the accessory, physical attributes associated with the attachment of the accessory to the tool, and other such factors.

### SUMMARY

In one aspect, an accessory tool for a power-driven oscillating tool includes a plate portion; an attachment portion provided on the plate portion and configured to couple the accessory tool to the power-driven oscillating tool; a first working section defined along a first peripheral edge portion of the plate portion, the first working section including a first convexly curved portion; a second working section defined along a second peripheral edge portion of the plate portion, the second working section including a second convexly curved portion; and a notch formed in a third peripheral edge portion of the plate, positioned between the first convexly curved portion and the second convexly curved portion.

In some implementations, the second working section has a second effective cutting thickness that is different than a first effective cutting thickness of the first working section. In some implementations, the second effective cutting thickness of the second working section is greater than the first effective cutting thickness of the first working section. In some implementations, the second working section has a second material thickness that is greater than a first material thickness of the first cutting section. In some implementations, the second working section has a second material thickness that is substantially the same as a first material thickness of the first working section, and the second working section includes a contoured surface such that the second effective cutting thickness of the second working section is greater than the first effective cutting thickness of the first working section.

In some implementations, the notch includes a first straight side edge that intersects the first convexly curved portion to form a first front corner portion and a second straight side edge that intersects the second convexly curved portion to form a second front corner portion. In some implementations, the plate portion further includes a first straight rear edge that intersects the first working section at substantially a right angle to form a first rear corner portion. In some implementations, the plate portion further includes a second straight rear edge that intersects the second working section at substantially a right angle to form a second rear corner portion. In some implementations, the first working section includes a first straight portion that extends from the first convexly curved portion to the first rear corner portion. In some implementations, the first working section includes a first straight portion that extends from the first convexly curved portion to the first rear corner portion.

In another general aspect, an accessory tool for a power-driven oscillating tool includes an attachment portion provided on a plate portion and configured to couple the accessory tool to the power-driven oscillating tool; and a plate portion. The plate portion includes a first working section defined along a first peripheral edge portion of the plate portion, the first working section including a first convexly curved portion and a straight first side edge portion extending rearward from the first convexly curved portion, a second working section defined along a second peripheral edge portion of the plate portion, the second working section including a second convexly curved portion and a straight second side edge portion extending rearward from the first convexly curved portion, a straight first rear edge portion that intersects the first working section to form a first rear corner portion, and a straight second rear edge portion that intersects the second working section to form a second rear corner portion.

In some implementations, the first peripheral edge portion and the first rear edge portion intersect at substantially a right angle. In some implementations, the second peripheral edge portion and the second rear edge portion intersect at a substantially right angle. In some implementations, the plate portion further includes a notch formed in a third peripheral edge portion of the plate between the first convexly curved portion and the second convexly curved portion. In some implementations, the notch includes a first straight side edge that intersects the first convexly curved portion to form a first front corner portion and a second straight side edge that intersects the second convexly curved portion to form a second front corner portion. In some implementations, the second working section has a second effective cutting thickness that is different than a first effective cutting thickness of the first working section. In some implementations, the second effective cutting thickness of the second working section is greater than the first effective cutting thickness of the first working section. In some implementations, the second working section has a second material thickness that is greater than a first material thickness of the first cutting section. In some implementations, the second working section has a second material thickness that is substantially the same as a first material thickness of the first working section, and the second working section includes a contoured surface such that the second effective cutting thickness of the second working section is greater than the first effective cutting thickness of the first working section.

In some implementations, the accessory tool includes a third working section defined along a third peripheral edge portion of the plate portion, wherein the first working section has a first effective cutting thickness, the second working section has a second effective cutting thickness that is different than the first effective cutting thickness, and the third working section has a third effective cutting thickness that is different than the first effective cutting thickness and the second effective cutting thickness.

In another general aspect, an accessory for an oscillating power tool includes a working portion; and an attachment portion configured to be coupled an attachment mechanism of an oscillating power tool that includes at least one clamping plate, the attachment portion including a U-shaped opening with a central portion configured to receive a central post of a tool clamping mechanism, and a rearward portion in communication with the central portion; a first plurality of elongated openings disposed radially outward from the central portion of the U-shaped opening, the first plurality of elongated openings including a first radial slot at approximately 90 degrees to the U-shaped opening, a second radial slot at approximately 180 degrees to the U-shaped opening, and a third radial slot at approximately 270 degrees from the U-shaped opening; a second plurality of elongated openings not in communication with the central opening, the second plurality of openings including a first radial opening spaced radially outward from the central portion between the first and second radial slots and a second radial opening spaced radially outward from the central portion between the second and third radial slots; and an enlarged opening in communication with the rearward portion of the U-shaped opening and have a first width greater than a diameter of the clamping plate. In some implementations, the first width is greater than a second width of the U-shaped opening.

Accordingly, there is provided an accessory tool in accordance with claim 1 and claim 8.

The details of one or more implementations are set forth in the accompanying drawings and the description below. Other features will be apparent from the description and drawings, and from the claims.

### BRIEF DESCRIPTION OF THE DRAWINGS

FIG. 1A is a perspective view of a power-driven oscillating tool and accessories for use with the oscillating tool.
FIG. 1B is a perspective view, partially in section, of the oscillating tool and one of the accessories of FIG. 1B.
FIG. 1C is a perspective view of a clamping plate of the attachment mechanism of the oscillating tool of FIGS. 1A and 1B.
FIG. 1D is a top view of an attachment portion of one of the accessories of FIG. 1A.
FIGs. 2A-2D are schematic views of removal of material by an example accessory tool of the example power-driven oscillating tool shown in FIG. 2A.
FIG. 3A is a perspective view, FIG. 3B is a plan view, and FIG. 3C is a side view, of an example accessory tool for a power-driven oscillating tool, in accordance with implementations described herein.
FIGs. 4A and 4B are schematic views of removal of material by the example accessory tool shown in FIGs. 3A-3C, in accordance with implementations described herein.
FIG. 5A is a perspective view, and FIG. 5B is a side view, of an example accessory tool, in accordance with implementations described herein.
FIG. 6A is a perspective view, and FIG. 6B is a side view, of an example accessory tool, in accordance with implementations described herein.
FIG. 7A is a perspective view, and FIG. 7B is a side view, of an example accessory tool, in accordance with implementations described herein.
FIG. 8A is a perspective view, and FIG. 8B is a side view, of an example accessory tool, in accordance with implementations described herein.
FIG. 9 is a plan view of an example output accessory tool, in accordance with implementations described herein.
FIG. 10 is a plan view of an example output accessory tool, in accordance with implementations described herein.
FIG. 11 is a plan view of an example output accessory tool, in accordance with implementations described herein.
FIG. 12 is a plan view of an example output accessory tool, in accordance with implementations described herein.
FIG. 13 is a plan view of an example output accessory tool, in accordance with implementations described herein.
FIG. 14A is a plan view of an example output accessory tool, in accordance with implementations described herein.
FIG. 14B is a plan view of an example output accessory tool, in accordance with implementations described herein.
FIG. 14C is a plan view of an example output accessory tool, in accordance with implementations described herein.

### DETAILED DESCRIPTION

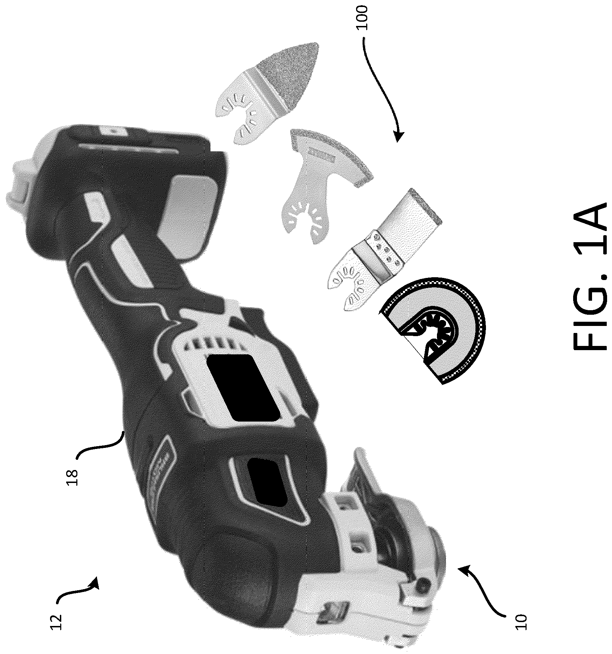

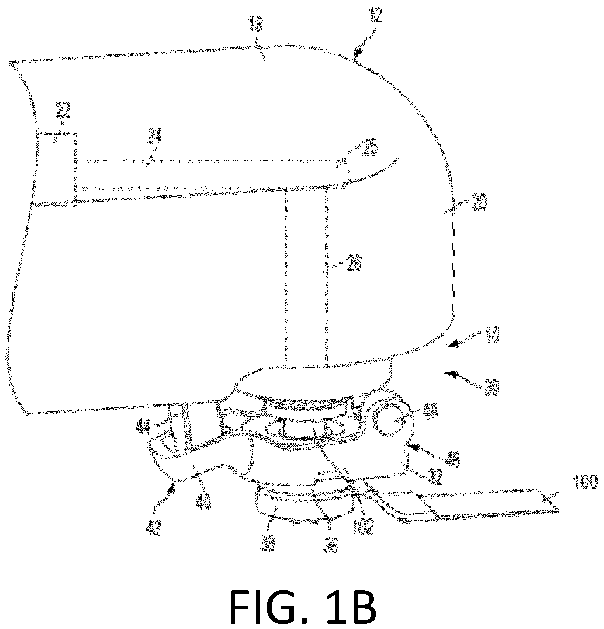

Referring to FIGS. 1A-1C, in an implementation, an oscillating power tool 12 usable with the accessories described in this application is similar to oscillating power tools sold under the brand names DEWALT^{®} and Porter-Cable^{®} and is described further in U.S. Patent No. 8,925,931. The power tool 12 includes a tool body 18 including a housing 20 that contains a motor 22 to drive an output member 24. An output spindle 26 is coupled to the motor 22 via a transmission 25 that converts rotary motion of the motor 22 to oscillating motion of the spindle 26. The output of the spindle 26 is coupled to an accessory attachment mechanism 10 via an output shaft 102. The accessory attachment mechanism 10 is configured to receive one or more of a plurality of accessories 100 (such as saw blades, rasps, abrasives, etc.) and does not require the use of a separate tool to couple the accessory to the oscillating power tool (also known as a "tool-free" attachment mechanism). An exemplary tool-free attachment mechanism 10 includes a clamp assembly 30 having a first clamp member 36 fixedly coupled to the output spindle, a second clamp member 38 facing the first clamp member 36, and a lever 32 coupled to the second clamp member 38. The lever 32 includes a lever arm 40 with a user engagement portion 42 and a block 44. The lever 32 further includes a pivot portion 46 having a pivot axle 48. The second clamp member 38 includes a second clamp body 70 generally in the form of a ring having a central opening 72. The second clamp body 70 has a second clamping surface 74 having a plurality of mounting features 76 formed thereon. In the example shown, the plurality of mounting features 76 are in the form of male projections 78. In the particular example shown, the eight male projections 78 each have a circular cross section and a tapered shape or form. In another related implementation, the male projections may have an oblong, oval, or rectangular cross-section and may also be tapered. In other implementations, the accessory 100 may be configured for use with or adapted for use with other oscillating power tools and accessory mounting mechanisms for oscillating power tools, such as those disclosed in U.S. Pat. App. Nos. 16/511,043; 15/893,610; 15/253,559; 15/065,024; 14/909,233; 14/909,247; and 12/798997; and U.S. Pat. Nos. 10,350,721; 10,137,592; 10,040,215; 9,670,998; 9,272,435; 9,346,183; 8,585,469; 8,182,316.

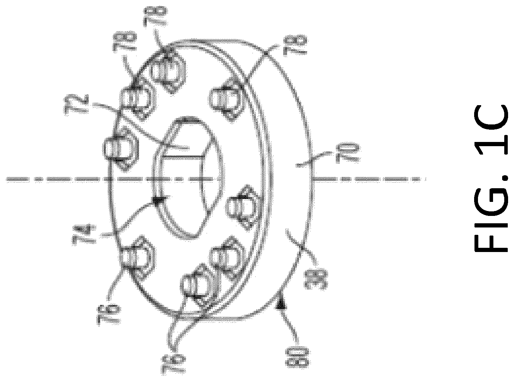

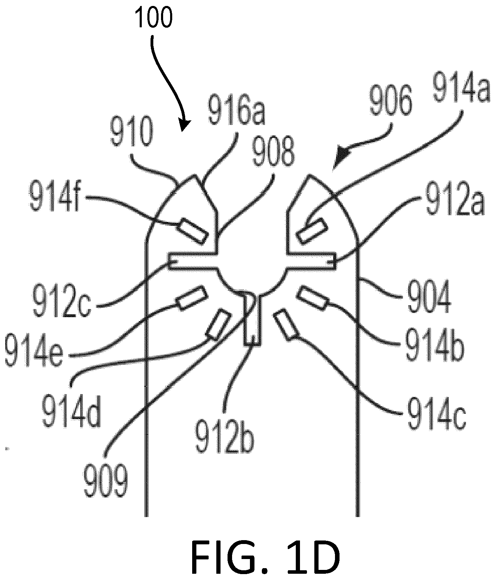

Referring also to FIG. 1D, each accessory 100 includes an attachment portion 904 configured to couple the accessory 100 with the attachment mechanism 10 on the power tool 12. In an exemplary implementation, the attachment portion 904 comprises a plurality of openings 906 configured to couple the accessory 100 to the mounting features 76 on the power tool 12 shown in FIG. 1C. The openings 906 include a generally U-shaped opening 908 extending from a rear end portion of the accessory tool 900 and terminating in a generally circular central portion 909. The U-shaped opening 908 is open at its rear end to receive the output shaft 102 on the attachment mechanism of the power tool 12. A first set of three radial arm openings 912a-912c (see FIG. 1D) are in communication with and extend radially outward from the central portion 909 at approximately 90 degrees, 180 degrees, and 270 degrees, respectively, relative to the U-shaped opening 908. A second set of six radial openings 914a-914e are spaced radially outward from and not in communication with the central portion 909, and are positioned at approximately 60 degrees, 120 degrees, 150 degrees, 210 degrees, 240 degrees, and 300 degrees relative to the U-shaped openings. Each of the radial openings 914a-914e may have a substantially rectangular shape defined by a pair of substantially straight, elongated sidewalls 915a, 915b and may extend substantially parallel to a radial direction, a pair of substantially straight end walls 915c, 915d extending substantially perpendicular to the radial direction, and four rounded comers 915e, 915f, 915g, 915h, each joining an adjacent sidewall and end wall. In addition, a pair of chamfers 916a, 916b taper outward from the radial openings 912a-912c and 914a-914f configured to receive the mounting features 76. The angular orientation of the accessory 100 can also be adjusted relative to the power tool 12. The openings 906 are also configured to receive differently configured projections on attachment mechanisms of other oscillating power tools, such as Fein^{®}, Ridgid^{®}, Mastercraft^{®}, Dremel^{®}, Bosch^{®}, Milwaukee^{®}, and Skil^{®} branded power tools. These and other implementations of the attachment portion of the accessories and their attachment to oscillating power tools are shown and described in U.S. Patent No. 9,242,361.

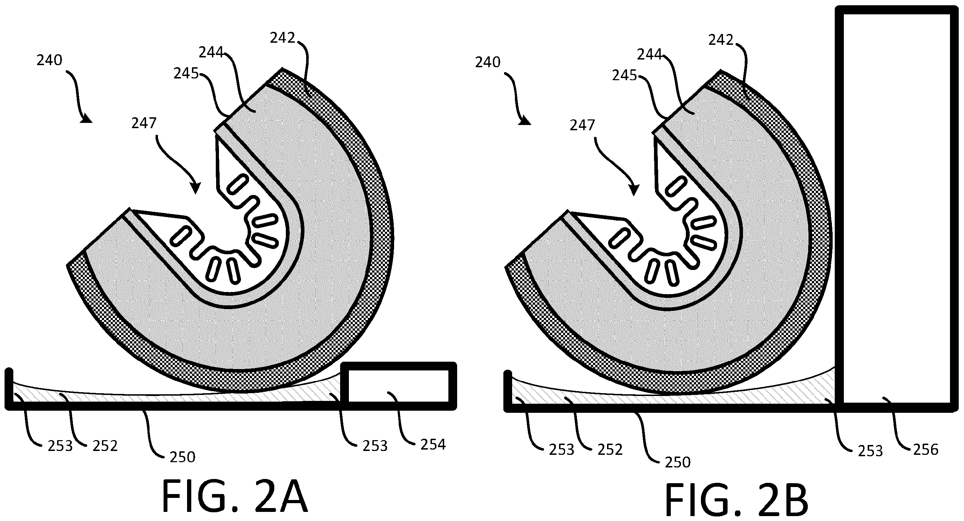

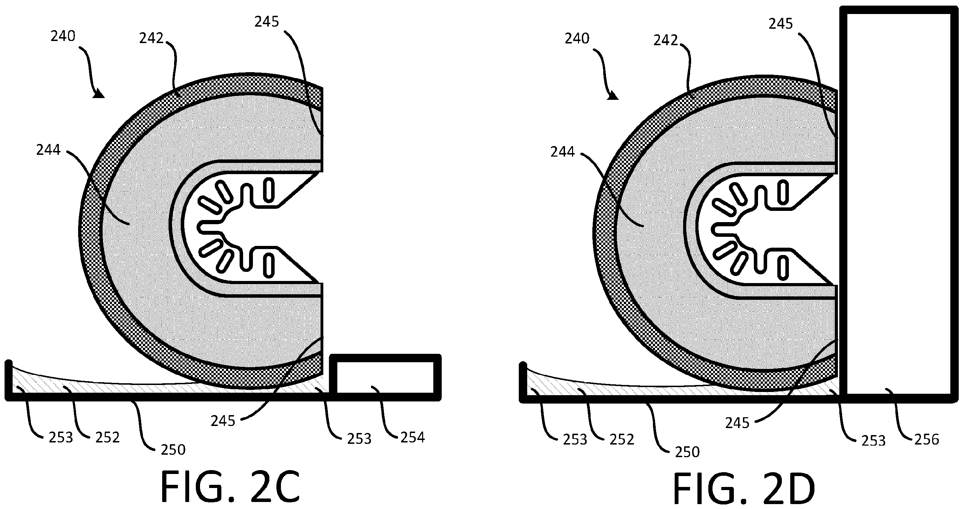

FIGs. 2A-2D illustrate operation of an exemplary one of the accessories in the form of a material removal blade 240 for use with the oscillating power tool 12 in the removal of grout. The example shown in FIGs. 2A-2D illustrates an example material removal blade 240 removing material 252 from channels 250 formed between adjacent boundaries 254, 256. For example, the example material removal blade 240 may be a grout removal blade removing grout from between adjacent tiles, between tiles and a wall, and other such material removal tasks. In the example shown in FIGs. 2A-2D, the boundaries include relatively lower first boundaries 254, such as, for example, tiles (FIGs. 2A and 2C), and relatively higher second boundaries 256 such as a threshold or a wall (FIGs. 2B and 2D). The example accessory tool 240 includes a convexly curved or semi-circular working section 242 defined along a peripheral portion of a plate portion 244 of the accessory tool 240. An attachment portion 247 provides for attachment of the example accessory tool 240 to the attachment device 10 of the example oscillating tool 12. The accessory tool 240 may oscillate in response to an oscillating force, or oscillating motion output by the oscillating tool 12. The oscillating motion of the accessory tool 240 causes material in contact with the working section 242 to be abraded, or removed.

In the examples shown in FIGs. 2A-2D, the working section 242 of the accessory tool 240 is inserted into the channels 250, in contact with the material 252, so that operation of the example tool 12 causes oscillation of the accessory tool 240 and removal of the material 252 from the channels 250. Removal of material 252 in portions, for example corner portions 253, of the channels 250 may not be as effective due to the rounded contour of the convexly curved or semi-circular contour of the working section 242 of the accessory tool 240. That is, in a first installation configuration of the accessory tool 240 relative to the oscillating tool 12 as shown in FIGs. 2A and 2B, the rounded contour of the working section 242 may impede or preclude access into the corner portion 253 of the channel 250, leaving residual material 252 in the corner portion 253. In a second installation configuration of the accessory tool 240 relative to the oscillating tool 12 as shown in FIGs. 2C and 2D, an orientation of the accessory tool 240 relative to the oscillating tool 12 has been adjusted so that a flattened end portion 245 of the plate portion 244 can be positioned against the first (lower) boundary 254 or the boundary 256 (i.e., the wall), in an effort to improve access to the corner portion 253 by the working section 242 of the accessory tool 240. However, even in the example arrangement shown in FIGs. 2C and 2D, residual material 252 remains in the corner portion 253 of the channel 250 once the working section 242 encounters the bottom of the channel 250. In some situations, the user may remove the accessory tool 240 currently in use, and replace with a differently configured accessory tool 240 in an attempt to remove the residual material 252 from the corner portion 253. In some situations, removal of the residual material 252 in the corner portion 253 may require manual removal. These solutions rely on user access to differently configured accessory tools and/or other manual removal tools, and add cost and/or complexity and/or time to complete the task.

An accessory tool, in accordance with implementations described herein, includes physical features and/or attributes that facilitate contact between the output accessory and the material of the workpiece, even in portions/areas of the workpiece that may be otherwise difficult to access. The one or more physical features may provide for differentiated amounts of cutting and/or abrading and/or scraping in a single output accessory, and/or may provide for multiple different cutting orientations and/or angles, thus avoiding the need to change output accessories in the middle of an operation to accommodate the physical attributes of a particular task.

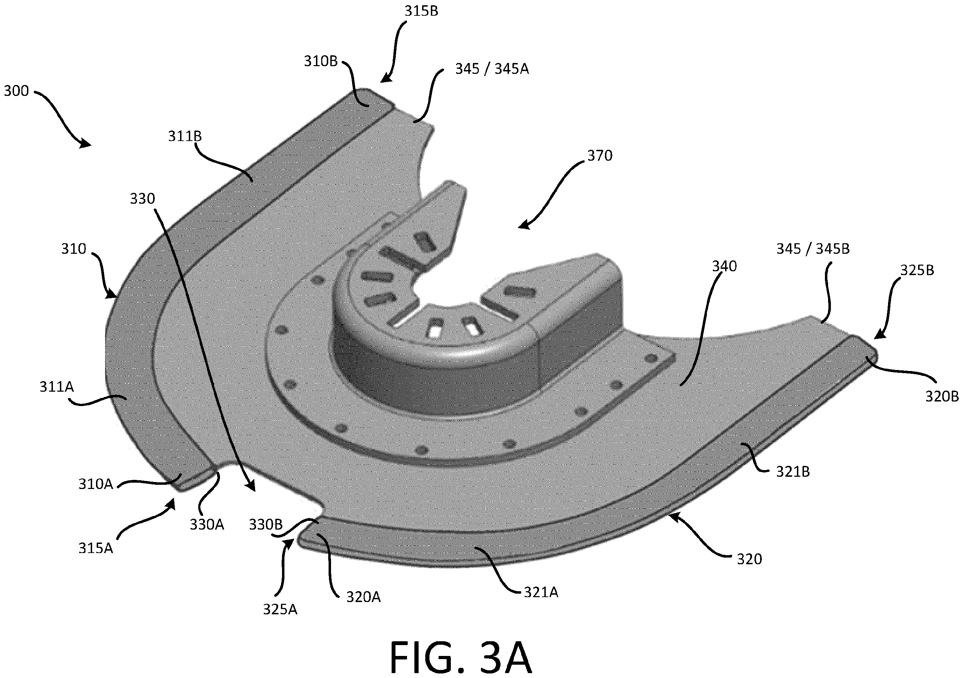

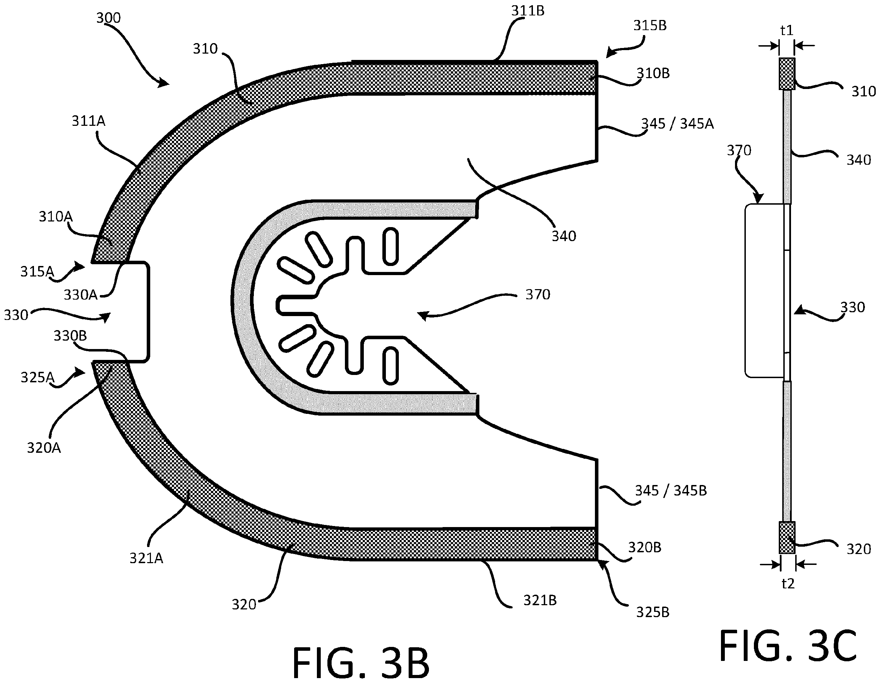

FIG. 3A is a perspective view, FIG. 3B is a plan view, and FIG. 3C is a side view, of an output accessory tool 300, in accordance with implementations described herein. The example accessory tool 300 may be attached to the example oscillating tool 12 shown in FIG. 1A, or another oscillating tool, to perform an operation on a workpiece. The example output accessory tool 300 shown in FIGs. 3A-3C is a grout removal blade, simply for purposes of discussion and illustration. The principles to be described herein may be applied to other types of output accessory tools that would benefit from one or more physical features that facilitate contact between an operating portion of the accessory tool and the workpiece, and in particular portions of the workpiece that may be otherwise difficult to access.

The example accessory tool 300 shown in FIGs. 3A-3C includes an attachment portion 370 provided on a plate portion 340 of the accessory tool 300. The attachment portion 370 is configured to engage the attachment device 10 of the example oscillating tool 12 shown in FIG. 1A, to couple the example accessory tool 300 to the example oscillating tool 12. Additional details regarding attachment of accessory tools to a power-driven oscillating tool may be found in U.S. Patent No. 9,186,770.

A first working section 310 is defined along a first peripheral portion of the plate portion 340. A second working section 320 is defined along a second peripheral portion of the plate portion 340. In some examples, the first working section 310 has a convexly curved, or semi-circular contour. In some examples, the second working section 320 has a convexly curved, or semi-circular contour A notch 330 is formed along a third peripheral portion of the plate portion 340, between the first working section 310 and the second working section 320. In some examples, the first working section 310 and the second working section 320 may define two separate, distinct cutting and/or abrading and/or chipping blades on the single accessory tool 300. In some examples, the two separate, distinct cutting and/or abrading and/or chipping blades defined by the first and second working sections 310, 320 may provide different cutting and/or abrading and/or chipping characteristics, thus essentially providing two different sets of capabilities, or two different modes of operation, on the single accessory tool 300.

The first working section 310 includes a first convexly curved (e.g., arcuate or semi-circular) portion 311A adjacent the notch 330 and a first straight edge portion 311B adjacent the first curved portion 311A. The second working section 320 includes a second convexly curved (e.g., arcuate or semi-circular) portion 321A adjacent the notch 330 and a second straight edge portion 321B adjacent the second curved portion 321A.

A first end portion 310A of the first working section 310 intersects a first straight edge portion 330A of the notch 330, so as to form a first front corner portion 315A. A second end portion 310B of the first working section 310 intersects a first flat end portion 345A of the plate portion 340, so as to form a first rear corner portion 315B. A first end portion 320A of the working section 320 intersects second straight edge portion 330B of the notch 330, so as to form a second front corner portion 325A. A second end portion 320B of the second working section 320 intersects a second flat end portion 345B of the plate portion 340, so as to form a second rear corner portion 325B. The first and second front corner portions 315A, 325A each form an acute or right angle, e.g., approximately 60° to approximately 90°. The first and second rear corner portions 315B, 325B each form an approximately right angle. The first and second working sections 310, 320 of the accessory tool 300 are configured to remove, or abrade, or chip material from a workpiece or work area. In some examples, the first and second working sections 310, 320 may be machined, and/or may be coated with and/or formed of an abrasive material to facilitate the removal of material from a workpiece or work area.

The first working section 310 has a first effective cutting thickness 11, and the second working section 320 has a second effective cutting thickness t2. In some examples, the second effective cutting thickness t2 of the second working section 320 is different from the first effective cutting thickness t1 of the first working section 310. This may allow for removal of different thicknesses of material and/or for insertion of the first and/or second working sections 310, 320 of the accessory tool 300 into different sized removal areas, using a single accessory tool 300. In some examples, the thickness t2 of the second working section 320 may be substantially the same as the thickness t1 of the first working section 310. In some examples, an abrasive material of the second working section 320 may be different than an abrasive material of the first working section 310, so that a material removal rate of the second working section 320 is different from a material removal rate of the first working section 310.

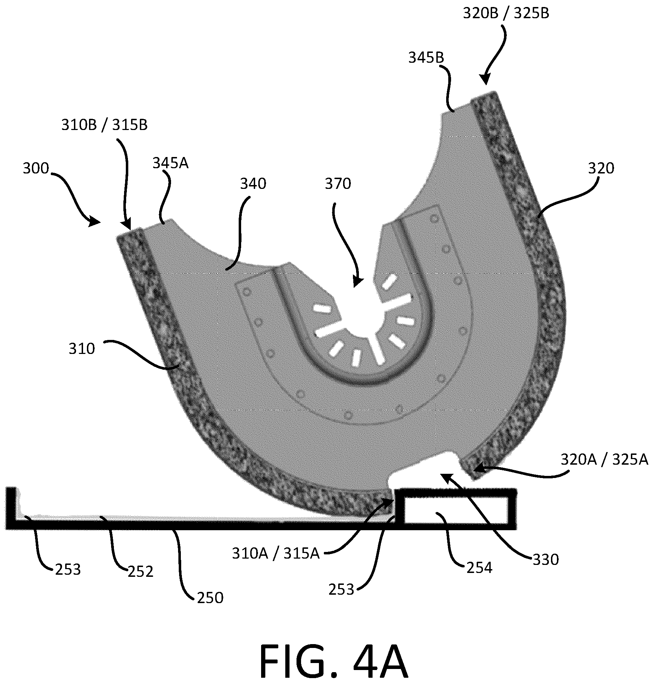

The notch 330 formed in the plate portion 340, between the first and second working sections 310, 320, and the resulting formation of the corner portion 315A of the first working section 310 and the corner portion 325A of the second working section 320, may facilitate the insertion of the first and/or second working section 310, 320 of the accessory tool 300 into portions of the workpiece that may be otherwise difficult to access. For example, FIG. 4A illustrates the first working section 310 inserted into the channel 250, so that oscillation of the accessory tool 300 causes removal of the material 252 from the channels 250. In this example arrangement, the corner portion 315A of the first working section 310 is inserted into the corner portion 253, so that material 252 may be substantially fully removed from the corner portion 253 of the channel 250. As shown in FIG. 4A, the substantially squared-off configuration of the corner portion 315A, as well as the opening defined by the notch 330, allows the corner portion 315A to be substantially fully engaged in the corner portion 253 of the channel 250. In the example arrangement shown in FIG. 4A, the opening defined by the notch 330 may provide a clearance area that allows the corner portion 315A of the first working section 310 to be engaged in the corner portion 253 of the channel 250, while the remainder of the accessory tool 300 (in this example, the remainder of the plate portion 340 and the second working section 320) to clear the first (lower) boundary 254. This may allow the material 252 to be substantially fully removed from the channel 250 without the need for attachment of other/additional accessory tools to complete the removal of material 252/removal of residual material 252, the manual removal of the residual material, and the like.

The example shown in FIG. 4A is described with respect to removal of material by the corner portion 315A of the first working section 310 of the accessory tool 300, simply for purposes of discussion and illustration. These principles may be similarly applied to the removal of material by the corner portion 325A of the second working section 320 of the accessory tool 300.

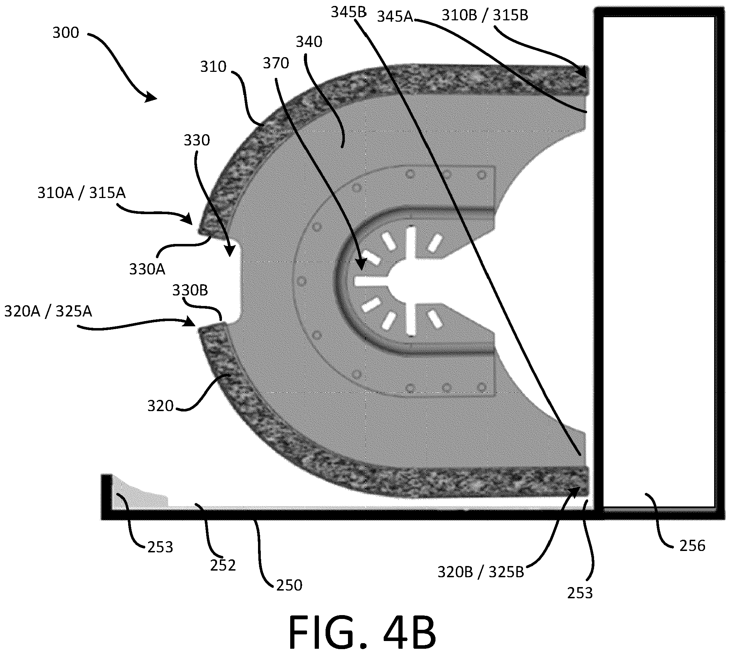

In a similar manner, the flat end portions 345 of the plate portion 340, at the respective second end portions 310B, 320B of the first and second working sections 310, 320, and the resulting formation of the corner portion 315B of the first working section 310 and the corner portion 325B of the second working section 320, may facilitate the insertion of the first and/or second working section 310, 320 of the accessory tool 300 into portions of the workpiece that may be otherwise difficult to access. For example, FIG. 4B illustrates the second working section 320 inserted into the channel 250, so that oscillation of the accessory tool 300 causes removal of the material 252 from the channels 250. In FIG. 4B, an orientation of the accessory tool 300 relative to the oscillating tool 12 has been adjusted so that the flat end portion 345 of the plate portion 340 can be positioned against the second (higher) boundary 256 (i.e., the wall), in an effort to improve access to the corner portion 253 of the channel 250. In this example arrangement, the corner portion 325B of the second working section 320 is inserted into the corner portion 253, abutting the second (higher) boundary 256, so that material 252 may be substantially fully removed from the corner portion 253 of the channel 250.

The substantially squared-off configuration of the corner portion 325B, as well as the substantially squared-off contour defined by the flat end portion 345 of the plate portion 340 and the corresponding flat portion of the second working section 320, allows the corner portion 325B of the second working section 320 to be substantially fully engaged in the corner portion 253 of the channel 250. In the example arrangement shown in FIG. 4B, the flat end portion 345 of the plate portion 340 allows the accessory tool 300 to substantially abut the second boundary 256, the flat portion of the second working section 320 to be positioned in the channel 250, and the corner portion 325B of the second working section 320 to be engaged in the corner portion 253 of the channel 250. This may allow the material 252 to be substantially fully removed from the channel 250 without the need for attachment of other/additional accessory tools to complete the removal of material 252/removal of residual material 252, the manual removal of the residual material, and the like.

The example shown in FIG. 4B is described with respect to removal of material by the corner portion 325B of the second working section 320 of the accessory tool 300, simply for purposes of discussion and illustration. These principles may be similarly applied to the removal of material by the corner portion 315B of the first working section 310 of the accessory tool 300.

As noted above, in some examples, the thickness t1 of the first working section 310 may be substantially the same as the thickness of the second working section 320. In some examples, the thickness t1 of the first working section 310 may be different from the thickness t2 of the second working section 320. This may allow for removal of different thicknesses of material and/or for insertion of the first and/or second working sections 310, 320 of the accessory tool 300 into different sized removal areas, using a single accessory tool 300. In some examples, a material and/or a coating of the first working section 310 may be different from a material and/or a coating of the second working section 320 so that a material removal rate of the first working section 310 is different from a material removal rate of the second working section 320. Various combinations of thicknesses and/or materials and/or coatings and/or configurations of the first working section 310 and the second working section 320 may be incorporated into the example accessory tool 300. A sizing and/or a position of the notch 330 relative to the first and second working sections 310, 320 may be adjusted based on, for example, overall sizing of the accessory tool 300, relative sizing of the first and second working sections, material removal capabilities of the first and second working sections 310, 320, and other such factors.

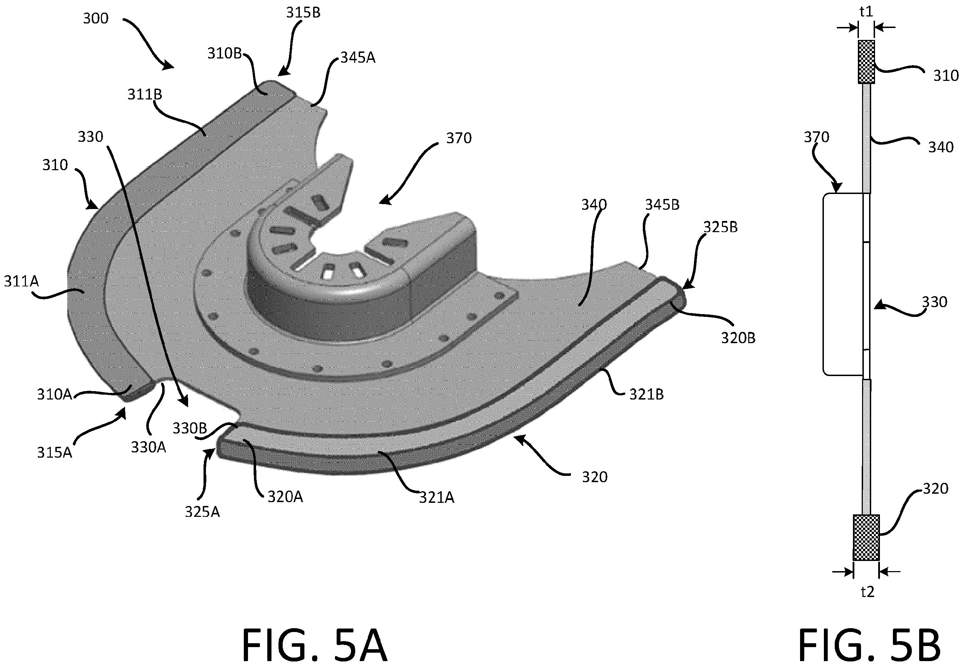

FIG. 5A is a perspective view, and FIG. 5B is a side view, of the example accessory tool 300 in which the thickness t2 of the second working section 320 is greater than the thickness t1 of the first working section 310. In the example shown in FIGs. 5A and 5B, the greater thickness t2 of the second working section 320 is achieved by a greater amount of material included in the second working section 320 and/or a greater amount of material applied to the second peripheral portion of the plate portion 340, corresponding to the second working section 320. In the example shown in FIGs. 5A and 5B, the second working section 320 has a substantially uniform thickness t2 from the first end portion 320A to the second end portion 320B.

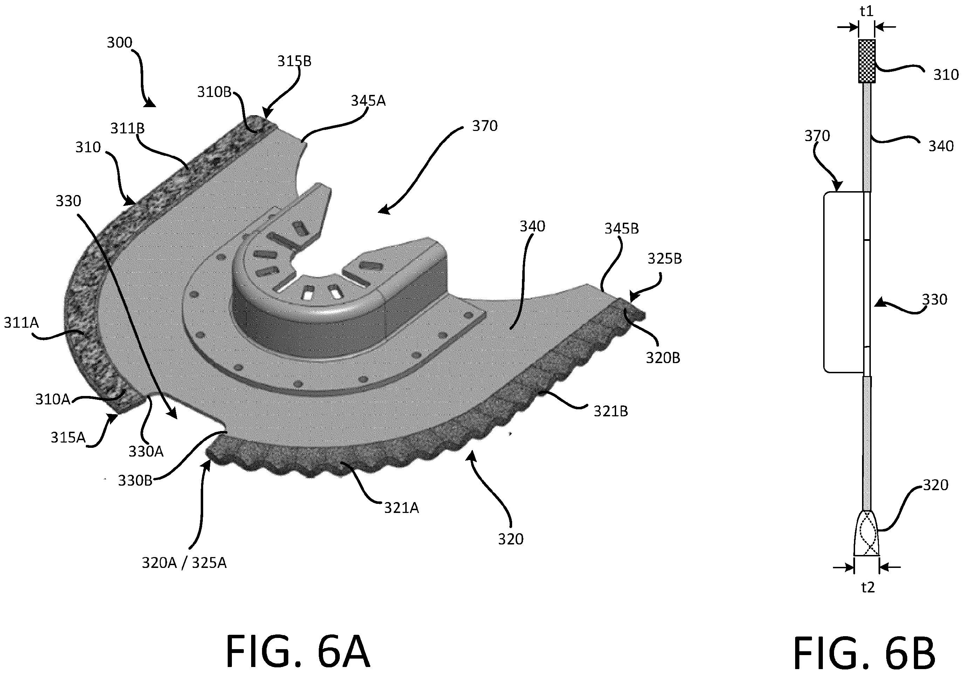

FIG. 6A is a perspective view, and FIG. 6B is a side view, of the example accessory tool 300 in which the thickness t2 of the second working section 320 is greater than the thickness t1 of the first working section 310. In the example shown in FIGs. 6A and 6B, the second working section 320 includes a wavy, or crimped contour. The wavy, or crimped contour of the second working section 320 produces a greater overall effective cutting thickness t2 without the use of a thicker base material and/or the addition or build-up of material on the base material of the plate portion 340 of the accessory tool 300. The example second working section 320 shown in FIGs. 6A and 6B includes the wavy contour to achieve the increased effective cutting thickness t2, simply for purposes of discussion and illustration. Other contours may also be used to achieve the increased thickness t2 including for example, a sawtooth pattern, a zig-zag pattern, and other such patterns along the length of the second working section 320.

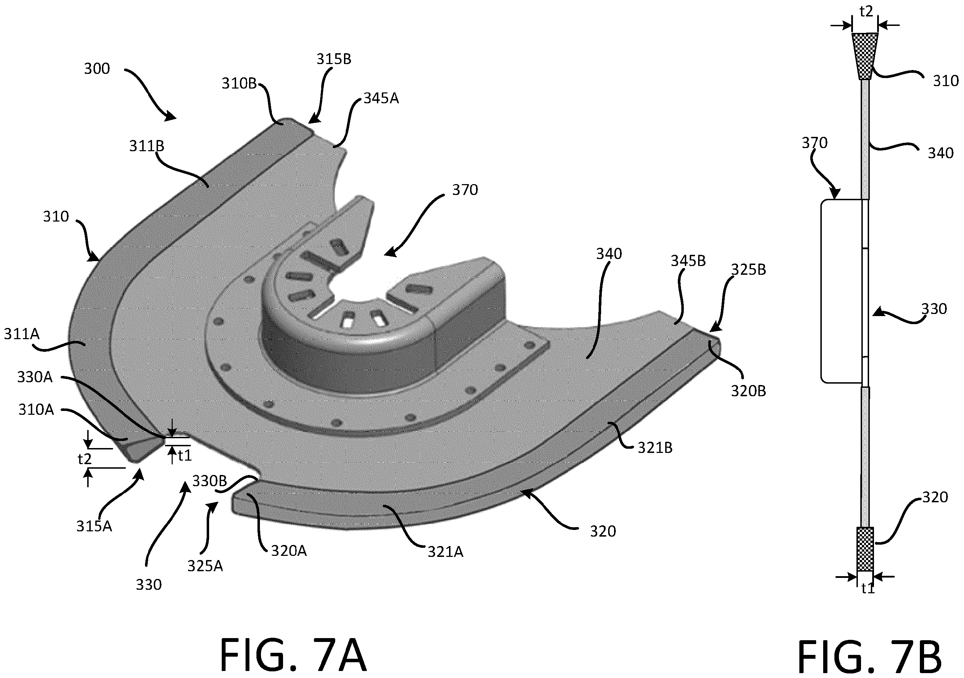

FIG. 7A is a perspective view, and FIG. 7B is a side view, of the example accessory tool 300 in which at least one of the first working section 310 or the second working section 320 is tapered. In the example shown in FIGs. 7A and 7B, the second working section 320 has a substantially uniform thickness t1 along the effective cutting length of the second working section 320. In the example shown in FIGs. 7A and 7B, the first working section 310 is tapered, such that the first working section 310 has a thickness t2 at an outer peripheral edge portion of the first working section 310 that is greater than a thickness t1 along an inner peripheral edge portion of the first working section 310. In some examples, one of the first working section 310 or the second working section 320 may be tapered such that the inner peripheral edge portion thereof has the thickness t2 that is greater than the thickness t1 at the outer peripheral edge portion thereof. In this arrangement, the tapering of one of the first working section 310 or the second working section 320 achieves the desired greater effective cutting thickness t2 in one of the first working section 310 or the second working section 320 than the effective cutting thickness t1 of the other of the first working section 310 or the second working section 320 of the accessory tool 300.

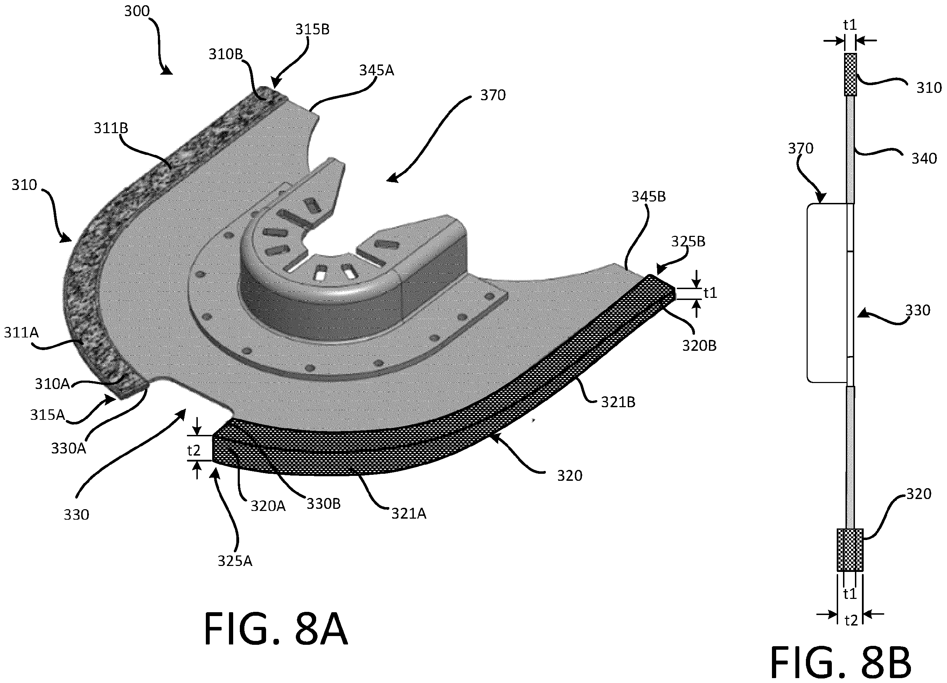

FIG. 8A is a perspective view, and FIG. 8B is a side view, of the example accessory tool 300 in which at least one of the first working section 310 or the second working section 320 is tapered. In the example shown in FIGs. 8A and 8B, the first working section 310 has a substantially uniform thickness t1 along the effective cutting length of the first working section 310. In the example shown in FIGs. 8A and 8B, the second working section 320 is tapered, such that the first end portion 320A of the second working section 320 has a thickness t2 that is greater than a thickness t1 of the second end portion 320B of the second working section 320. Thus, in this example, the thickness of the second working section 320 tapers, or gets gradually thinner going from the first end portion 320A to the second end portion 320B. In some examples, one or both of the first working section 310 or the second working section 320 may be tapered in this manner. In this arrangement, the tapering of one of the first working section 310 or the second working section 320 achieves the desired greater effective cutting thickness t2 in one of the first working section 310 or the second section 320 than the effective cutting thickness t1 of the other of the first working section 310 or the second working section 320 of the accessory tool 300.

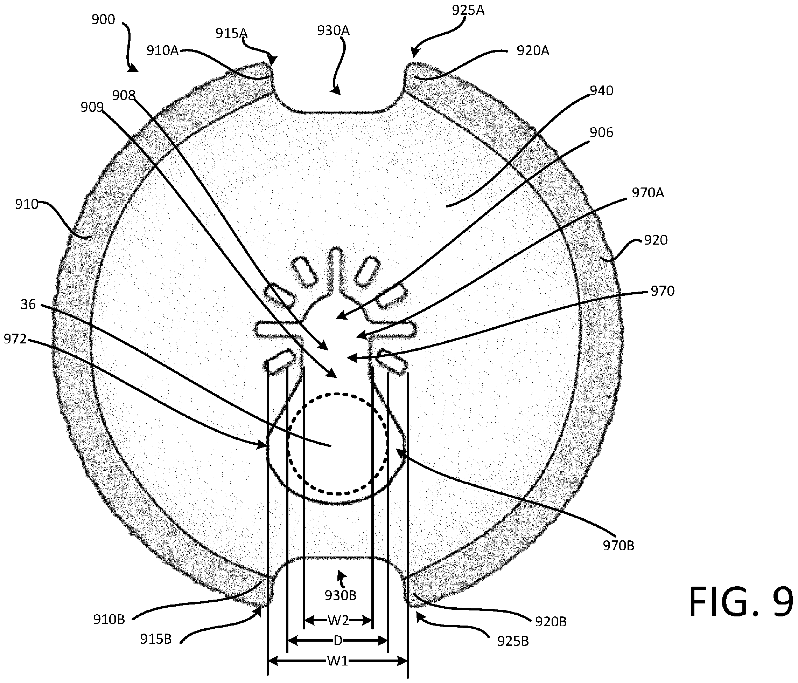

FIG. 9 is a plan view of an example output accessory tool 900, in accordance with implementations described herein. The example accessory tool 900 may be attached to the example oscillating tool 12 shown in FIG. 1A, or another oscillating tool, to perform an operation on a workpiece. The example accessory tool 900 includes an attachment portion 970 provided on a plate portion 940 of the accessory tool 900. The attachment portion 970 is configured to engage the attachment device 10 of the example oscillating tool 12 shown in FIG. 1A, to couple the example accessory tool 900 to the example oscillating tool 12. The attachment portion 970 includes a first attachment portion 970A with a plurality of openings 906 similar to the attachment portion 904 described above with respect to FIG. 1D and configured to couple the accessory tool 900 with the attachment mechanism 10 on the power tool 12. Like the attachment portion 904 in Fig. 1D, the first attachment portion 970A includes a plurality of openings 906 that include a generally U-shaped opening 908 with a generally circular central portion 909, a first set of three radial arm openings 912a-912c in communication with and extending radially outward from the central portion 909 at approximately 90 degrees, 180 degrees, and 270 degrees, respectively, relative to the U-shaped opening 908, and a second set of six radial openings 914a-914e spaced radially outward from and not in communication with the central portion 909, and positioned at approximately 60 degrees, 120 degrees, 150 degrees, 210 degrees, 240 degrees, and 300 degrees relative to the U-shaped openings. The attachment portion 970 of Fig. 9 differs from the attachment portion 904 of Fig. 1D in that it additionally includes a second attachment portion 970B. The second attachment portion 970B includes an enlarged opening 972 in communication with the rear end of the U-shaped opening 908. The enlarged opening 972 may be tear drop shaped and has a width W1 that is greater than a width W2 of the U-shaped opening 908 and that is greater than the diameter D of the clamp member 36 (shown in phantom) of the clamp assembly of the power tool 12. This enables the accessory tool 900 to be coupled to the attachment mechanism of the power tool 12 without requiring an open rear end of the U-shaped opening 908 to receive the output shaft 102 on the attachment mechanism of the power tool 12.

A first working section 910 is defined along a first peripheral portion of the plate portion 940. A second working section 920 is defined along a second peripheral portion of the plate portion 940. In the example shown in FIG. 9, the first working section 910 has a convexly curved, or semi-circular contour, and the second working section 920 has a convexly curved, or semi-circular contour. A first notch 930A is formed along a third peripheral portion of the plate portion 940, between a first end portion 910A of the first working section 910 and a first end portion 920A of the second working section 920. A second notch 930B is formed along a fourth peripheral portion of the plate portion 940, between a second end portion 910B of the first working section 910 and a second end portion 920B of the second working section 920. Respective first corner portions 915A, 925A are formed at the intersection of the first end portions 910A, 920A of the first and second working sections 910, 920 with the first notch 930A. Respective second corner portions 915B, 925B are formed at the intersection of the second end portions 910B, 920B of the first and second working sections 910, 920 with the second notch 930B. The first working section 910 and the second working section 920 define two separate, distinct cutting and/or abrading and/or chipping blades on the single accessory tool 900 having different cutting and/or abrading and/or chipping characteristics, thus essentially providing two different sets of capabilities, or two different modes of operation, on the single accessory tool 900. In some examples, the first working section 910 and the second working section 920 may have substantially the same thickness. In some examples, the first and second working sections 910, 920 may have different thicknesses.

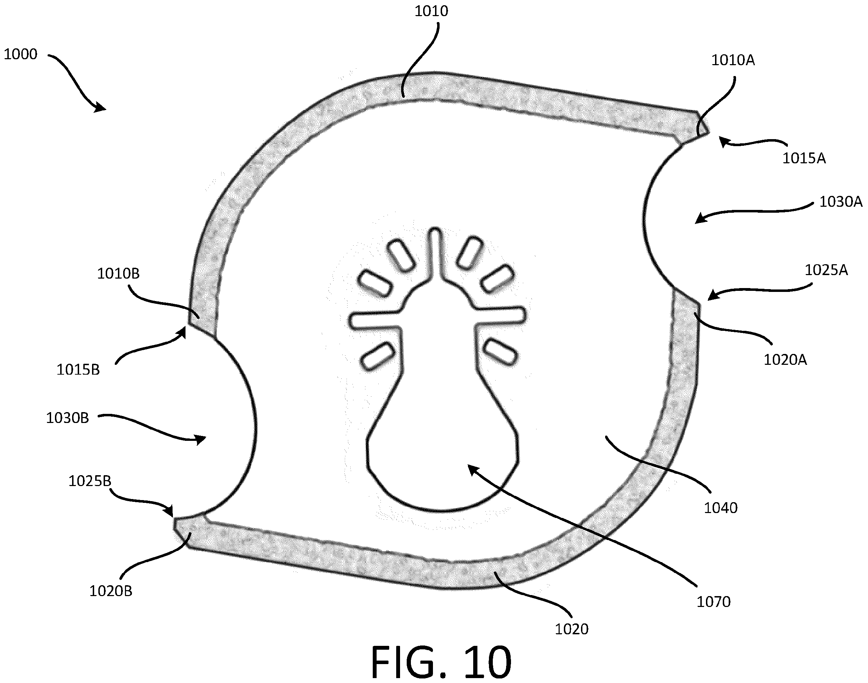

FIG. 10 is a plan view of an example output accessory tool 1000, in accordance with implementations described herein. The example accessory tool 1000 may be attached to the example oscillating tool 12 shown in FIG. 1A, or another oscillating tool, to perform an operation on a workpiece. The example accessory tool 1000 includes an attachment portion 1070 provided on a plate portion 1040 of the accessory tool 1000. The attachment portion 1070 is substantially similar to the attachment portion 970 of Fig. 9 and is configured to engage the attachment device 10 of the example oscillating tool 12 shown in FIG. 1A, to couple the example accessory tool 1000 to the example oscillating tool 12. A first working section 1010 is defined along a first peripheral portion of the plate portion 1040. A second working section 1020 is defined along a second peripheral portion of the plate portion 1040. In the example shown in FIG. 10, the first working section 1010 has a convexly curved contour that is different from the substantially semi-circular contour shown in FIG. 9, and the second working section 1020 has a convexly curved contour that is different from the substantially semi-circular contour shown in FIG. 9. A first notch 1030A is formed along a third peripheral portion of the plate portion 1040, between a first end portion 1010A of the first working section 1010 and a first end portion 1020A of the second working section 1020. A second notch 1030B is formed along a fourth peripheral portion of the plate portion 1040, between a second end portion 1010B of the first working section 1010 and a second end portion 1020B of the second working section 1020. Respective first corner portions 1015A, 1025A are formed at the intersection of the first end portions 1010A, 1020A of the first and second working sections 1010, 1020 with the first notch 1030A. Respective second corner portions 1015B, 1025B are formed at the intersection of the second end portions 1010B, 1020B of the first and second working sections 1010, 1020 with the second notch 1030B. The first working section 1010 and the second working section 1020 define two separate, distinct cutting and/or abrading and/or chipping blades on the single accessory tool 1000 having different cutting and/or abrading and/or chipping characteristics, thus essentially providing two different sets of capabilities, or two different modes of operation, on the single accessory tool 1000. In some examples, the first working section 1010 and the second working section 1020 may have substantially the same thickness. In some examples, the first and second working sections 1010, 1020 may have different thicknesses.

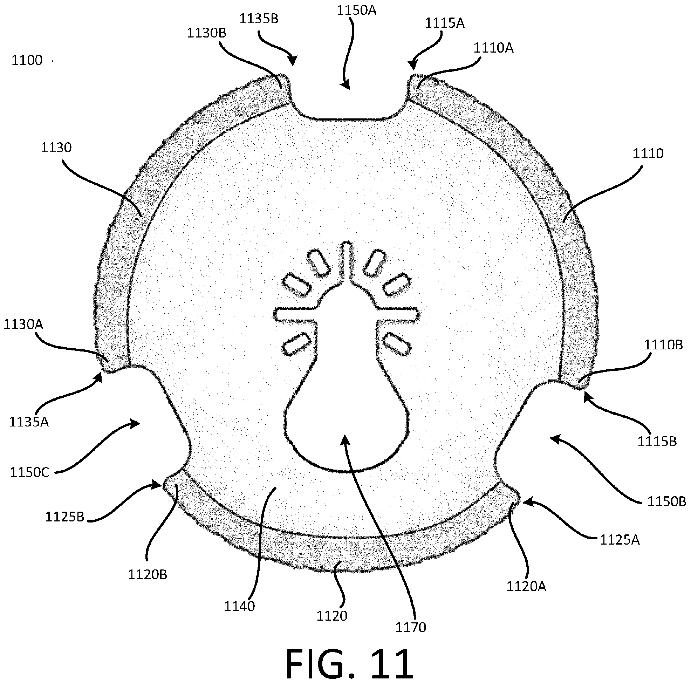

FIG. 11 is a plan view of an example output accessory tool 1100, in accordance with implementations described herein. The example accessory tool 1100 may be attached to the example oscillating tool 12 shown in FIG. 1A, or another oscillating tool, to perform an operation on a workpiece. The example accessory tool 1100 includes an attachment portion 1170 provided on a plate portion 1140 of the accessory tool 1100. The attachment portion 1170 is substantially similar to the attachment portion 970 of Fig. 9 and is configured to engage the attachment device 10 of the example oscillating tool 12 shown in FIG. 1A, to couple the example accessory tool 1100 to the example oscillating tool 12. A first working section 1110 is defined along a first peripheral portion of the plate portion 1140. A second working section 1120 is defined along a second peripheral portion of the plate portion 1140. A third working section 1130 is defined along a third peripheral portion of the plate portion 1140. In the example shown in FIG. 11, the first working section 1110 has a convexly curved, or arcuate contour, the second working section 1120 has a convexly curved, or arcuate contour, and the third working section 1130 has a convexly curved, or arcuate contour. A first notch 1150A is formed between a first end portion 1110A of the first working section 1010 and a second end portion 1130B of the third working section 1130, defining respective corner portions 1115A, 1135B. A second notch 1150B is formed between a second end portion 1110B of the first working section 1110 and a first end portion 1120A of the second working section 1120, defining respective corner portions 1115B, 1125A. A third notch 1150C is formed between a second end portion 1120B of the second working section 1120 and a first end portion 1130A of the third working section 1130, defining respective corner portions 1125B, 1135A. The first working section 1110, the second working section 1120 and the third working section 1130 define three separate, distinct cutting and/or abrading and/or chipping blades on the single accessory tool 1100 having different cutting and/or abrading and/or chipping characteristics, thus essentially providing three different sets of capabilities, or three different modes of operation, on the single accessory tool 1100. In some examples, the first working section 1110, the second working section 1120 and the third working section 1130 may have substantially the same thickness. In some examples, the first, second and third working sections 1110, 1120, 1130 may have different thicknesses. In some examples, the first, second and third working sections 1110, 1120, 1130 may have different combinations of thicknesses.

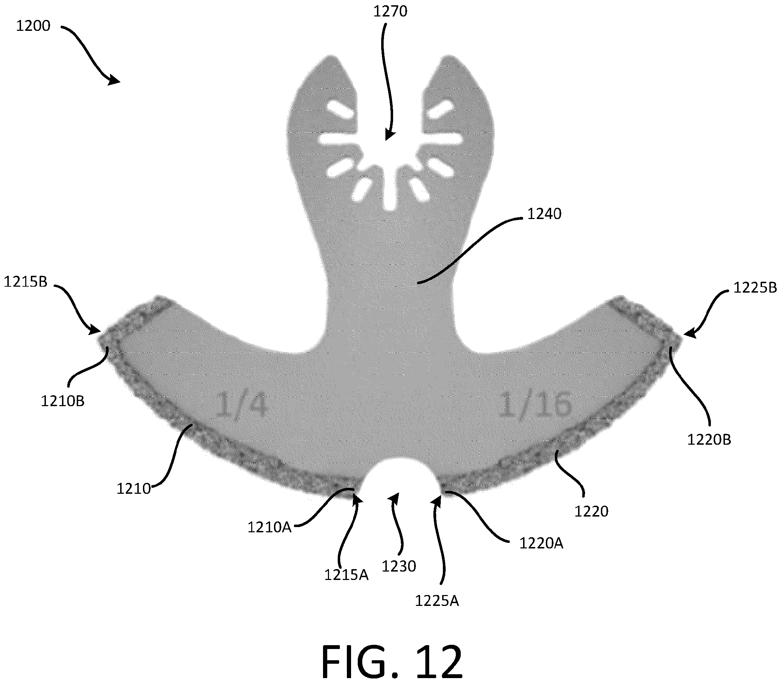

FIG. 12 is a plan view of an example output accessory tool 1200, in accordance with implementations described herein. The example accessory tool 1200 may be attached to the example oscillating tool 12 shown in FIG. 1A, or another oscillating tool, to perform an operation on a workpiece. The example accessory tool 1200 includes an attachment portion 1270 provided on a plate portion 1240 of the accessory tool 1200. The attachment portion 1270 is configured to engage the attachment device 10 of the example oscillating tool 12 shown in FIG. 1A, to couple the example accessory tool 1200 to the example oscillating tool 12. A first working section 1210 is defined along a first peripheral portion of the plate portion 1240. A second working section 1220 is defined along a second peripheral portion of the plate portion 1240. In the example shown in FIG. 12, the first working section 1210 has a convexly curved, or arcuate contoured portion and a straight portion, and the second working section 1220 has a convexly curved, or arcuate contoured portion and a straight portion. A notch 1230 is formed along a third peripheral portion of the plate portion 1240, between a first end portion 1210A of the first working section 1210 and a first end portion 1220A of the second working section 1220. Respective first corner portions 1215A, 1225A are formed at the intersection of the first end portions 1210A, 1220A of the first and second working sections 1210, 1220 with the notch 1230. Second corner portions 1215B, 1225B are formed at respective second end portions 1210B, 1220B of the first and second working sections 1210, 1220, where the first and second working sections 1210, 1220 transition from the convexly contoured portion thereof into the straight portion thereof. The first working section 1210 and the second working section 1220 define two separate, distinct cutting and/or abrading and/or chipping blades on the single accessory tool 1200 having different cutting and/or abrading and/or chipping characteristics, thus essentially providing two different sets of capabilities, or two different modes of operation, on the single accessory tool 1200. In some examples, the first working section 1210 and the second working section 1220 may have substantially the same thickness. In some examples, the first and second working sections 1210, 1220 may have different thicknesses and/or combinations of thicknesses.

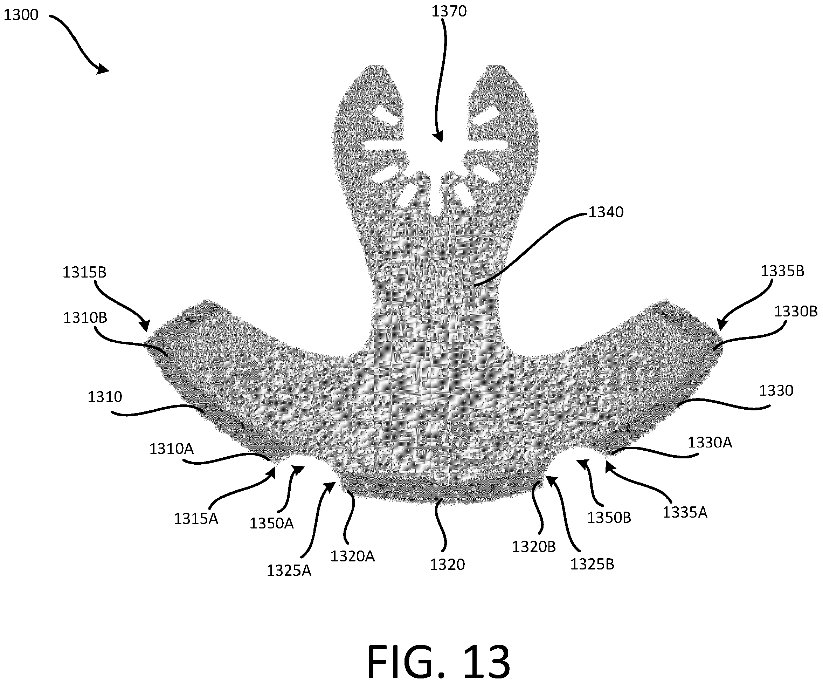

FIG. 13 is a plan view of an example output accessory tool 1300, in accordance with implementations described herein. The example accessory tool 1300 may be attached to the example oscillating tool 12 shown in FIG. 1A, or another oscillating tool, to perform an operation on a workpiece. The example accessory tool 1300 includes an attachment portion 1370 provided on a plate portion 1340 of the accessory tool1300. The attachment portion 1370 is configured to engage the attachment device 10 of the example oscillating tool 12 shown in FIG. 1A, to couple the example accessory tool 1300 to the example oscillating tool 12. A first working section 1310 is defined along a first peripheral portion of the plate portion 1340. A second working section 1320 is defined along a second peripheral portion of the plate portion 1340. A third working section 1330 is defined along a third peripheral portion of the plate portion 1340. In the example shown in FIG. 13, the first working section 1310, and the third working section 1330 have a convexly curved, or arcuate contoured portion and a straight portion, and the second working section 1320 has a convexly curved, or arcuate contoured portion. A first notch 1350A is formed between a first end portion 1310A of the first working section 1310 and a first end portion 1320A of the second working section 1320, defining respective corner portions 1315A, 1325A. A second notch 1350B is formed between a second end portion 1320B of the second working section 1320 and a first end portion 1330A of the third working section 1330, defining respective corner portions 1325B, 1335A. Corner portions 1315B, 1335B are formed at respective second end portions 1310B, 1330B of the first and third working sections 1310, 1330, where the first and third working sections 1310, 1330 transition from the convexly contoured portion thereof into the straight portion thereof. The first working section 1310, the second working section 1320 and the third working section 1330 define three separate, distinct cutting and/or abrading and/or chipping blades on the single accessory tool 1300 having different cutting and/or abrading and/or chipping characteristics, thus essentially providing three different sets of capabilities, or three different modes of operation, on the single accessory tool 1300. In some examples, the first working section 1310, the second working section 1320 and the third working section 1330 may have substantially the same thickness. In some examples, the first, second and third working sections 1310, 1320, 1330 may have three different thicknesses. In some examples, the first, second and third working sections 1310, 1320, 1330 may have different combinations of thicknesses.

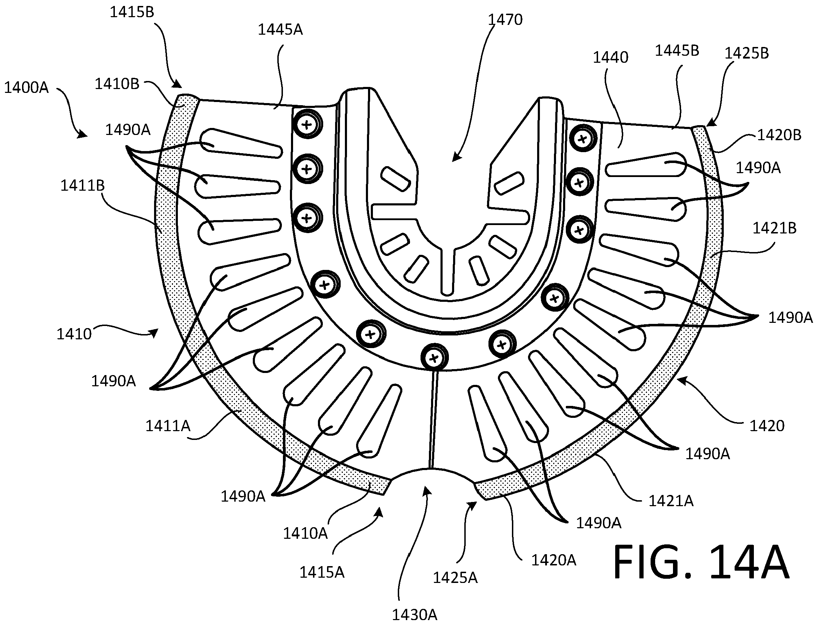

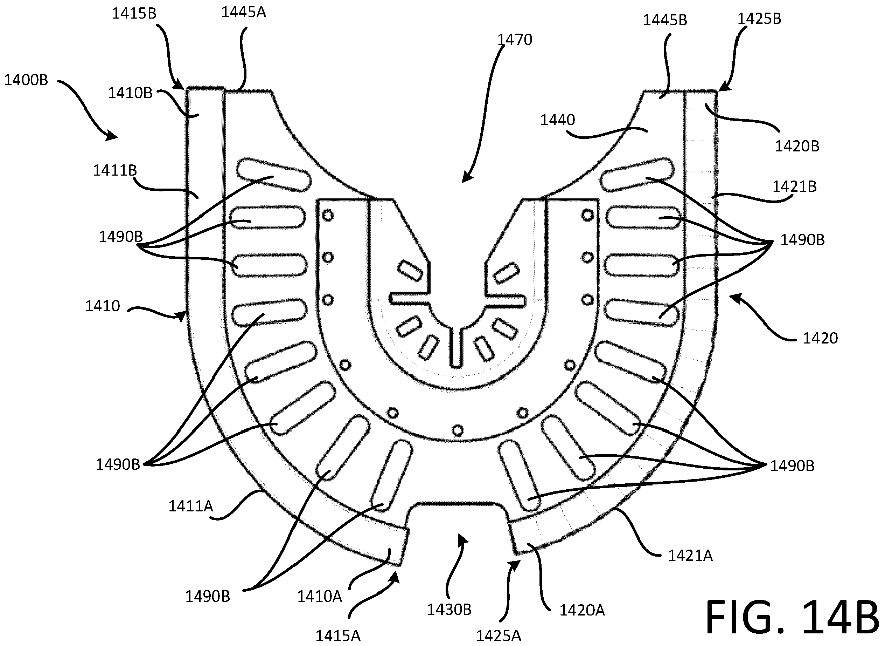

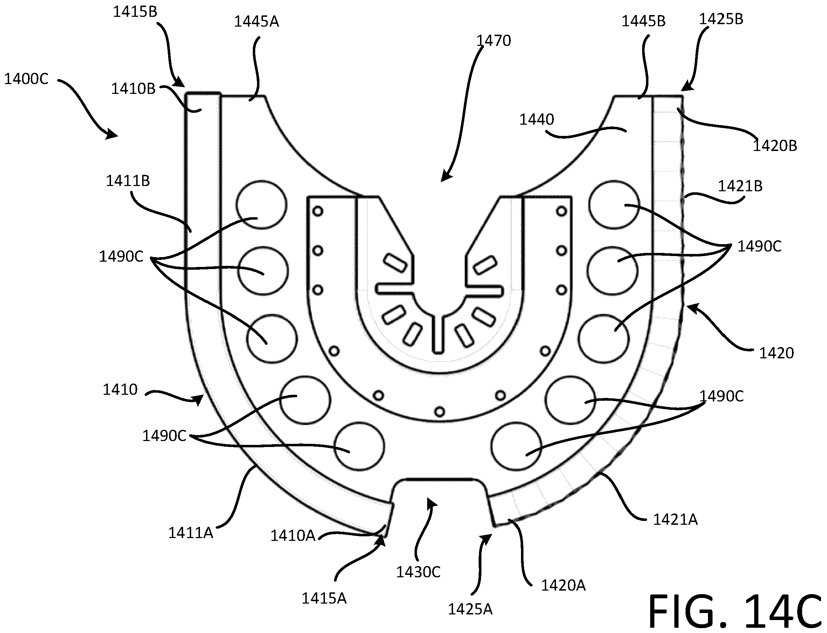

FIGs. 14A, 14B and 14C are plan views of output accessory tools 1400 (1400A, 1400B, 1400C), in accordance with implementations described herein. The example configurations of the accessory tools 1400 shown in FIGs. 14A-14C may be attached to the example oscillating tool 12 shown in FIG. 1A, or another oscillating tool, to perform an operation on a workpiece. The example output accessory tool 1400 is a grout removal blade, simply for purposes of discussion and illustration. The principles to be described herein may be applied to other types of output accessory tools that would benefit from one or more physical features that facilitate contact between an operating portion of the accessory tool and the workpiece, and in particular portions of the workpiece that may be otherwise difficult to access.

The example accessory tool 1400 includes an attachment portion 1470 provided on a plate portion 1440 of the accessory tool 1400 to couple the example accessory tool 1400 to the example oscillating tool 12. A first working section 1410 is defined along a first peripheral portion of the plate portion 1440. A second working section 1420 is defined along a second peripheral portion of the plate portion 1440. In some examples, the first working section 1410 and/or the second working section 1420 has a convexly curved, or semi-circular contour. A notch 1430 is formed along a third peripheral portion of the plate portion 1440, between the first working section 1410 and the second working section 1420. In particular, in the configuration shown in FIG. 14A, the accessory tool 1400A includes a notch 1430A having a somewhat curved, or arcuate contour. In the configuration shown in FIG. 14B, the accessory tool 1400B includes a notch 1430B having a somewhat squared, or rectangular configuration. In the configuration shown in FIG. 14C, the accessory tool 1400C includes a notch 1430C having a somewhat squared, or rectangular configuration The first working section 1410 and the second working section 1420 may define two separate, distinct cutting and/or abrading and/or chipping blades on the single accessory tool 1400. In some examples, the two separate, distinct cutting and/or abrading and/or chipping blades defined by the first and second working sections 1410, 1420 may provide different cutting and/or abrading and/or chipping characteristics, thus essentially providing two different sets of capabilities, or two different modes of operation, on the single accessory tool 1400.

In some examples, the first working section 1410 includes a first convexly curved (e.g., arcuate or semi-circular) portion 1411A adjacent the notch 1430 and a first straight edge portion 1411B adjacent the first curved portion 1411A. The second working section 1420 includes a second convexly curved (e.g., arcuate or semi-circular) portion 1421A adjacent the notch 1430 and a second straight edge portion 1421B adjacent the second curved portion 1421A.

A first end portion 1410A of the first working section 1410 intersects a first end portion of the notch 1430 to form a first front corner portion 1415A. A second end portion 1410B of the first working section 1410 intersects a first flat end portion 1445A of the plate portion 1440 to form a first rear corner portion 1415B. A first end portion 1420A of the second working section 1420 intersects a second end portion of the notch 1430 to form a second front corner portion 1425A. A second end portion 1420B of the second working section 1420 intersects a second flat end portion 1445B of the plate portion 1440 to form a second rear corner portion 1425B. In some examples, the first and second front corner portions 1415A, 1425A each form an acute angle, e.g., approximately 60° to approximately 90°. The first and second rear corner portions 1415B, 1425B each form an approximately right angle. The first and second working sections 1410, 1420 of the accessory tool 1400 are configured to remove, or abrade, or chip material from a workpiece or work area. In some examples, the first and second working sections 1410, 1420 may be machined, and/or may be coated with and/or formed of an abrasive material to facilitate the removal of material from a workpiece or work area.

As described above, the first working section 1410 may have a first effective cutting thickness, and the second working section 1420 may have a second effective cutting thickness that is different from the first effective cutting thickness to allow for removal of different thicknesses of material and/or for insertion of the first and/or second working sections 1410, 1420 into different sized removal areas, using a single accessory tool 1400. In some examples, an abrasive material of the second working section 1420 may be different than an abrasive material of the first working section 1410, so that a material removal rate of the second working section 1420 is different from a material removal rate of the first working section 1410. As described above, the notch 1430 formed between the first and second working sections 1410, 1420, and the resulting corner portions 1415A, 1425A may facilitate the insertion of the first and/or second working section 1410, 1420 of the accessory tool 1400 into portions of the workpiece that may be otherwise difficult to access.

In the example configurations shown in FIGs. 14A-14C, a plurality of openings 1490 (1490A, 1490B, 1490C) are formed in the plate portion 1440 of the respective output accessory tool 1400 (1400A, 1400B, 1400C), arranged circumferentially around the attachment portion 1470. An arrangement of the openings 1490 with respect to the attachment portion 1470 may provide the user with a visual alignment indicator for guiding movement of the accessory tool 1400, while reducing a weight of the accessory tool 1400 without sacrificing performance. In particular, the example accessory tool 1400A shown in FIG. 14A includes a plurality of openings 1490A configured as elongated, tapered, or teardrop shaped slots arranged circumferentially around and extending radially outward with respect to the attachment portion 1470. The example accessory tool 1400B shown in FIG. 14B includes a plurality of openings 1490B configured as elongated, elliptical slots arranged circumferentially around, and extending radially outward with respect to the attachment portion 1470. The example accessory tool 1400C shown in FIG. 14C includes a plurality of substantially circular openings 1490C arranged circumferentially with respect to the attachment portion 1470. The openings shown in FIGs. 14A-14C are provided simply for purposes of discussion and illustration. In some examples, the accessory tool 1400 may include openings 1490 in the plate portion 1440 having different shapes and/or sizes and/or combinations of shapes and/or sizes, and/or may be arranged differently than shown.

## Claims

1. An accessory tool for a power-driven oscillating tool, the accessory tool including:
a plate portion;
an attachment portion provided on the plate portion and configured to couple the accessory tool to the power-driven oscillating tool;
a first working section defined along a first peripheral edge portion of the plate portion, the first working section including a first convexly curved portion;
a second working section defined along a second peripheral edge portion of the plate portion, the second working section including a second convexly curved portion;
a notch formed in a third peripheral edge portion of the plate, positioned between the first convexly curved portion and the second convexly curved portion.

2. The accessory tool of claim 1, wherein the second working section has a second effective cutting thickness that is different than a first effective cutting thickness of the first working section and, preferably, the second effective cutting thickness of the second working section is greater than the first effective cutting thickness of the first working section.

3. The accessory tool of claim 2, wherein the second working section has a second material thickness that is greater than a first material thickness of the first cutting section.

4. The accessory tool of claim 2, wherein the second working section has a second material thickness that is substantially the same as a first material thickness of the first working section, and the second working section includes a contoured surface such that the second effective cutting thickness of the second working section is greater than the first effective cutting thickness of the first working section.

5. The accessory tool of claim 1, wherein the notch includes a first straight side edge that intersects the first convexly curved portion to form a first front corner portion and a second straight side edge that intersects the second convexly curved portion to form a second front corner portion.

6. The accessory tool of claim 1, wherein the plate portion further includes a first straight rear edge that intersects the first working section at substantially a right angle to form a first rear corner portion and/or further includes a second straight rear edge that intersects the second working section at substantially a right angle to form a second rear corner portion.

7. The accessory tool of claim 6, wherein the first working section includes a first straight portion that extends from the first convexly curved portion to the first rear corner portion.

8. An accessory tool for a power-driven oscillating tool, the accessory tool including:
an attachment portion provided on a plate portion and configured to couple the accessory tool to the power-driven oscillating tool; and
a plate portion, including:
a first working section defined along a first peripheral edge portion of the plate portion, the first working section including a first convexly curved portion and a straight first side edge portion extending rearward from the first convexly curved portion,
a second working section defined along a second peripheral edge portion of the plate portion, the second working section including a second convexly curved portion and a straight second side edge portion extending rearward from the first convexly curved portion,
a straight first rear edge portion that intersects the first working section to form a first rear corner portion, and
a straight second rear edge portion that intersects the second working section to form a second rear corner portion.

9. The accessory tool of claim 8, wherein the first peripheral edge portion and the first rear edge portion intersect at substantially a right angle and/or the second peripheral edge portion and the second rear edge portion intersect at substantially a right angle.

10. The accessory tool of claim 8, wherein the plate portion further includes a notch formed in a third peripheral edge portion of the plate portion between the first convexly curved portion and the second convexly curved portion.

11. The accessory tool of claim 10, wherein the notch includes a first straight side edge that intersects the first convexly curved portion to form a first front corner portion and a second straight side edge that intersects the second convexly curved portion to form a second front corner portion and, preferably, the second working section has a second effective cutting thickness that is different than a first effective cutting thickness of the first working section.

12. The accessory tool of claim 11, wherein the second effective cutting thickness of the second working section is greater than the first effective cutting thickness of the first working section.

13. The accessory tool of claim 12, wherein the second working section has a second material thickness that is greater than a first material thickness of the first working section.

14. The accessory tool of claim 12, wherein the second working section has a second material thickness that is substantially the same as a first material thickness of the first working section, and the second working section includes a contoured surface such that the second effective cutting thickness of the second working section is greater than the first effective cutting thickness of the first working section.

15. The accessory tool of claim 8, further comprising a third working section defined along a third peripheral edge portion of the plate portion, wherein
the first working section has a first effective cutting thickness,
the second working section has a second effective cutting thickness that is different than the first effective cutting thickness, and
the third working section has a third effective cutting thickness that is different than the first effective cutting thickness and the second effective cutting thickness.
